# EUROPEAN PATENT SPECIFICATION

(11) **EP 2 019 854 B1**
(45) Date of publication and mention of the grant of the patent: **18.05.2011**
(21) Application number: 07732863.1
(22) Date of filing: 18.05.2007
(51) Int. Cl.: C10G 3/00

(54) **HYDROGENATION PROCESS**
HYDRIERVERFAHREN
PROCÉDÉ D'HYDROGÉNATION

(30) Priority: 25.05.2006 EP 06252735
(43) Date of publication of application: 04.02.2009
(73) Proprietor: BP OIL INTERNATIONAL LIMITED, Sunbury-on-Thames, Middlesex TW16 7BP (GB)
(72) Inventor: GUDDE, Nicholas, John, Windlesham Surrey GU20 6PL (GB); TOWNSEND, James, Adam, Ashgrove Queensland 4060 (AU)
(74) Representative: Oldroyd, Richard Duncan
(86) International application number: PCT/GB2007/001841
(87) International publication number: WO 2007/138254

(56) References cited:
- DE-A1- 3 340 711
- US-A- 5 705 722
- US-A1- 2004 230 085

## Description

This invention relates to the field of hydrogenation, more specifically to the hydroprocessing of carboxylic acids and/or carboxylic acid esters, for example biologically derived fatty acids and/or fatty acid esters, to produce fuels.

Fuels such as gasoline, diesel and jet fuel, are generally produced by the processing of crude oil. In a crude oil refinery, fuel precursor compositions are typically produced by mixing straight run fractions from the crude distillation unit with refinery streams derived from the upgrading of heavier or lighter fractions from the crude distillation unit. Often, these compositions contain undesirable components, such as aromatics, olefins or sulphurous compounds, and require further treatment in order to render them suitable for use as fuels. One way in which this is achieved is to subject them to hydrogenation processes such as hydrotreatment or hydrocracking in order to reduce levels of undesirable components. Typically, such processes entail contacting the precursor fuel composition with hydrogen at elevated temperature and pressure, optionally in the presence of a catalyst, wherein olefins and aromatics are hydrogenated to paraffins, and sulphur-containing compounds are converted to hydrogen sulphide, which can be removed from the fuel using a flash or separator vessel.

With increasing focus on fossil fuel-derived carbon dioxide and its potential impact on climate change, there is increasing demand for fuels which reduce the net quantity of carbon dioxide released to the atmosphere. One way of achieving this is to use biomass as the source of the fuel. Biomass, whether plant or animal-derived, is ultimately produced by the fixation of atmospheric carbon dioxide through photosynthesis and associated biochemical processes. As the quantity of carbon dioxide released on combustion of biomass is equivalent to the quantity of carbon dioxide extracted from the atmosphere for its production, biomass combustion is effectively a CO₂-neutral process. However, as the quantity of biologically-derived materials suitable for use as fuels, such as diesel or gasoline, is not always sufficient to meet demand, the blending of biologically derived materials with existing mineral-derived fuels is increasingly being considered as an attractive option for reducing a fuel's atmospheric CO₂-impact

A problem associated with blending biologically derived oils, such as fatty acids and/or fatty acid esters, with existing fuel formulations is that combustion engines may need to be modified in order to run efficiently on the modified fuel. One way of avoiding the need for engine modification is to convert the biological oils to hydrocarbons that can readily be blended with existing fuel. Such a process is described, for example, in US 5,705,722, in which a biomass feedstock is reacted with hydrogen to produce a mixture of hydrocarbons, the middle distillate fraction of which is suitable for blending with conventional diesel fuel.

Another process, described by Baldauf & Balfanz in VDE Reports No 1126 (1994) pp153-168, describes the co-hydrotreatment of a refinery-derived middle distillate stream and biologically-derived oil to produce a diesel fuel.

US 2004/230085 discloses a process for producing a hydrocarbon component of biological origin, wherein the process comprises an HDO step and an isomerisation step.

However, a problem associated with co-hydrotreatment of biologically-derived oils, which comprise fatty acids and/or fatty acid esters, with a refinery middle distillate stream is that hydrotreating fatty acids and/or fatty acid esters is generally more exothermic and consumes more hydrogen than hydrotreating a middle distillate fuel. In addition, more gaseous by-products such as carbon dioxide are typically produced, which can lead to higher rates of corrosion of process equipment.

According to the present invention, there is provided a process for the production of a fuel composition comprising hydrocarbons derived from carboxylic acids and/or carboxylic acid esters, which process comprises the steps of :
(a) feeding hydrogen and a first hydrocarbon-containing process stream to a first reactor;
(b) maintaining conditions within the first reactor sufficient to produce a first hydrocarbon-containing product stream with a reduced concentration of heteroatom-containing organic compounds and/or olefins compared to the first hydrocarbon-containing process stream, wherein said heteroatom-containing organic compounds are selected from compounds other than carboxylic acids and esters thereof;
(c) removing the first hydrocarbon-containing product stream from the first reactor;
   characterised by the process additionally comprising the steps of :
(d) feeding hydrogen, a carboxylic acid and/or carboxylic acid ester, and at least a portion of the first hydrocarbon-containing product stream to a second reactor;
(e) maintaining conditions within the second reactor sufficient to convert at least some of the carboxylic acid and/or carboxylic acid ester to one or more hydrocarbons;
(f) removing a second hydrocarbon-containing product stream from the second reactor, in which at least a portion of the hydrocarbons are derived from the carboxylic acid and/or carboxylic acid ester.

The present invention comprises two hydrogenation stages, wherein the first stage involves contacting a first hydrocarbon-containing process stream with hydrogen to reduce the levels of olefin and/or heteroatom-containing organic compounds contained therein to produce a first hydrocarbon-containing product stream, and the second step involves hydrogenation of a carboxylic acid and/or ester in combination with at least a portion of the first hydrocarbon-containing product stream. Such a process enables carboxylic acids and/or carboxylic acid esters to be hydrogenated in a way that is readily retrofittable to existing hydrogenation processes, as operated for example in a crude-oil refinery, which minimises any disruption or down-time during installation and start-up of the second reactor. In addition, conditions within the second reactor can be maintained such that the hydrogenation of the carboxylic acid and/or carboxylic acid ester to hydrocarbons is optimised, which may be different from the conditions maintained in the first reactor. The present invention is particularly suitable for the production of fuel compositions in which components derived from the carboxylic acid and/or ester are in the minority, such that the separate hydrogenations enable optimum yields of the desired fuel to be achieved for each feedstock. Preferably, the fuel comprises in the range of from 0.1 to 49.9% by weight of components derived from carboxylic acid and/or carboxylic acid ester, such as in the range of 2 to 15% by weight.

A mixture of more than one carboxylic acid and/or carboxylic acid ester can be used. The carboxylic acid and/or ester, or mixtures of carboxylic acids and/or esters, is preferably chosen such that the one or more hydrocarbons produced by the reaction in the second reactor are in the same range as those in the target fuel. For example, diesel fuels typically comprise hydrocarbons having in the range of from 10 to 22 carbon atoms. Thus, carboxylic acids which produce hydrocarbons with numbers of carbon atoms in this range would be suitable, such as mono- or di-carboxylic acids including n-hexadecanoic acid or 1,16-di hexadecanoic acid and/or esters thereof. Fatty acids and/or their esters are also suitable, with general formula R¹C(O)OH and/or R¹C(O)O-R², where R¹ and R² are typically hydrocarbon chains. Examples of fatty acids and/or esters suitable for use in accordance with the present invention in the production of a diesel fuel include, for example, lauric, myristic, palmitic, stearic, linoleic, linolenic, oleic, arachidic and erucic acids and/or esters thereof, wherein R¹ comprises 11, 13, 15, 17, 17, 17, 17, 19 and 21 carbon atoms respectively. The esters may be present as mono-, di- or triglycerides, with general formula [R¹C(O)O]ₙC₃H₅(OH)₃₋ₙ, where n = 1,2 or 3 for mono-, di- or triglycerides respectively. The fatty acids and/or esters thereof may have saturated or unsaturated hydrocarbon groups. Di- or tri-glycerides may comprise hydrocarbon chains derived from the same or different fatty acids.

Preferably, the carboxylic acid and/or ester is derived from biomass, being a component for example of plant or animal-derived oil or fat. Use of biologically-derived carboxylic acids and/or esters ensures that the resulting fuel composition has a lower net emission of atmospheric carbon dioxide compared to an equivalent fuel derived purely from mineral sources. Suitable biological sources of carboxylic acids and/or esters include plant-derived oils, such as rapeseed oil, peanut oil, canola oil, sunflower oil, tall oil, corn oil, soybean oil. Animal oils or fats, such as tallow fat or chicken fat, are also suitable sources of carboxylic acids and/or esters, as are waste oils, such as used cooking oils.

Biological oils or fats comprise triglycerides with hydrocarbon groups having numbers of carbon atoms commensurate with hydrocarbons typically found in diesel fuel. Thus, the process of the present invention is preferably used to produce diesel fuel, in which the second reactor is maintained under hydrotreating conditions, which consumes less hydrogen and requires less energy than converting the biological oils or fats to lower boiling fuels such as jet fuel, gasoline or LPG, which typically require harsher hydrocracking conditions.

In the process of the present invention, a first hydrocarbon-containing process stream is fed to a first reactor, in which it is reacted with hydrogen. The first hydrocarbon-containing process stream is suitably a liquid process stream. It may be derived from gas or coal, wherein liquid hydrocarbons have been produced therefrom through processes such as steam reforming and/or partial oxidation coupled with Fischer Tropsch synthesis. Alternatively, the first hydrocarbon-containing process stream can be derived from crude oil. The present invention is particularly suitable for crude oil-derived liquid hydrocarbon process streams, as they are typically higher in heteroatom-containing organic compounds compared to Fischer Tropsch-derived hydrocarbons.

Suitable process streams derived from the refining of crude oil include naphtha, kerosene, or middle distillate fractions. The process stream may be a straight-run fraction taken directly from a crude oil distillation unit, or it may be derived from or comprise hydrocarbons produced by other refinery processes, such as cracking, reforming, coking, dearomatisation and/or alkylation. Typically, crude oil-derived streams contain components such as olefins and/or heteroatom-containing organic compounds, in particular organosulphur compounds, and hence are suitably treated with hydrogen by processes such as hydrocracking or hydrotreating.

The first hydrocarbon-containing process stream preferably comprises middle distillate hydrocarbons, which boil at temperatures typically in the range of from 150 to 400°C, and wherein the number of carbon atoms is typically in the range of from 10 to 22 carbon atoms. This fraction is preferably used to produce diesel fuel, although it can also be used to produce heating oil and jet fuel. The straight-run fraction may be mixed with hydrocarbons produced by other refinery processes, such as steam cracking and/or hydrocracking of heavier crude fractions, which produce hydrocarbons in a similar boiling range to that of the straight-run fraction.

The first hydrocarbon-containing process stream comprises alkanes, olefins and/or one or more heteroatom-containing compounds. Typically, the heteroatom-containing compounds are sulphur-containing compounds such as mercaptans or thiols. They are typically present at concentrations greater than that allowed in the desired fuel by State regulatory authorities. Thus, the sulphur content of the first hydrocarbon-containing process stream is typically 200ppm or more, such as 0.1 % by weight or more, for example in the range of from 0.2 to 2% by weight, expressed as elemental sulphur. Olefins may be present at concentrations up to 50% by weight, typically up to 20% by weight. Other possible constituents of the first hydrogen-containing product stream include aromatic compounds, such as naphthenes. Preferably, the first hydrocarbon-containing product stream does not comprise carboxylic acids and/or esters or biomass-derived constituents, as these are preferably fed to the second reactor.

Conditions in the first reactor are maintained so as to reduce the concentration of olefins and/or heteroatom-containing organic compounds contained in the first hydrocarbon-containing process stream. This can be achieved by employing conditions typically used in refinery hydrocracking or hydrotreating processes.

Hydrotreating or hydrocracking is typically carried out at temperatures in the range of from 250 to 430°C and pressures in the range of from 20 to 200 bara (2 to 20 MPa). The severity of the conditions depends on the nature of the hydrocarbon-containing process stream being fed to the reactor, and the nature of the desired fuel product. For example, where removing heteroatom-containing organic compounds from a stream suitable for gasoline fuel is the main concern, low severity, hydrotreating conditions employing temperatures in the range of from 250 to 350°C and pressures in the range of from 20 to 40 bara (2 to 4 MPa) are typically used. For removing heteroatom-containing organic compounds from a process stream suitable for diesel fuel, then moderate severity hydrotreating conditions may be employed, with temperatures typically in the range of from 300 to 400°C and pressures in the range of from 30 to 70 bara (3 to 7 MPa). For vacuum gas oil feedstocks more severe hydrotreating conditions may be employed, such as temperatures in the range of from 350 to 410°C and pressures in the range of from 70 to 150 bara (7 to 15 MPa). Where cracking of feedstocks to produce, for example, a mixture of hydrocarbons suitable for gasoline and/or diesel fuels is required, then higher severity, hydrocracking conditions are employed, such as temperatures in the range of from 350 to 430°C, and pressures in the range of from 100 to 200 bara (10 to 20 MPa).

The hydrogenation reaction in the first reactor may be catalysed or uncatalysed, preferably catalysed. Suitable catalysts include those comprising one or more ofNi, Co, Mo (others), preferably Ni and Mo, or Co and Mo. The catalyst is typically supported on a support such as zirconia, titania or gamma-alumina, preferably gamma alumina. Such catalysts are suitable for both hydrotreating and hydrocracking, depending on the reaction conditions.

The reaction in the first reactor may be a hydrocracking reaction in the presence of a hydrocracking catalyst, a hydrotreating reaction in the presence of a hydrotreating catalyst, or may be a combined hydrocracking and hydrotreating reaction, optionally in the presence of two or more catalyst beds.

The product of the first reactor, the first hydrocarbon-containing product stream, has lower concentrations of olefms and/or heteroatom-containing organic compounds than the first hydrocarbon-containing process stream fed to the first reactor.

In a preferred embodiment of the invention the sulphur concentrations in the first hydrocarbon-containing product stream are typically less than 200ppm expressed as elemental sulphur. At least a portion of the first hydrocarbon-containing product stream is fed to the second reactor, optionally and preferably with prior removal of light end components such as hydrogen sulphide and unreacted hydrogen using, for example, a flash separator. The unreacted hydrogen may suitably be recycled back to the first reactor, used as feed to the second reactor, or used elsewhere, for example in a different refinery process.

Carboxylic acid and/or carboxylic acid ester is fed to the second reactor with hydrogen and at least a portion of the product stream from the first reactor. An advantage of diluting the carboxylic acid and/or ester in the second reactor with the first hydrocarbon-containing product stream that has already been reacted with hydrogen, the exotherm generated in the second reactor is reduced. This is particularly advantageous in improving the yield of diesel, for example, as the production of lighter hydrocarbons that are more suitable for gasoline or LPG (liquefied petroleum gas) is reduced. It may also extend the active life of the catalyst by minimising the temperatures to which it is exposed. Additionally the diluting effect of the first hydrocarbon-containing product stream can mitigate the extent of catalyst fouling that may occur by reducing unwanted side reactions of the carboxylic acid and/or ester. The diluting effect may also reduce hydrogen consumption within the catalyst bed, leading to reduced catalyst coking. Yet another advantage of combining the carboxylic acid and/or ester with a portion of the first product stream for the second reactor is that the concentrations of any residual olefins and/or heteroatom-containing organic compounds that remain in the first product stream from the first reactor can be further reduced.

The carboxylic acid and/or ester, the hydrogen and the portion of the first hydrocarbon-containing product stream may be fed to the second reactor separately. Alternatively, any or all of the separate components can be pre-mixed before being fed to the second reactor. Optionally, additional hydrocarbons, for example a portion of the first hydrocarbon-containing process stream that has not been fed to the first reactor, can be fed to the second reactor in addition to the first hydrocarbon-containing product stream and the carboxylic acid and/or ester. In this embodiment, the quantity of any additional hydrocarbons fed to the second reactor is sufficiently low so that the advantages of diluting the carboxylic acid and/or ester with an already hydrogenated product stream (the first hydrocarbon-containing product stream) can still be realised.

Conditions in the second reactor are maintained such that the carboxylic acid and/or ester is converted into one or more hydrocarbons. Typically, other by-products such as carbon dioxide, carbon monoxide, propane and water, are also produced during the reaction. Conditions typically used in a hydrotreater or hydrocracker, as described above, are maintained in the second reactor, these being dependent on the nature of the carboxylic acid and/or ester or the biomass material that is fed to the reactor. Hydrogen consumption by the carboxylic acid and/or ester is typically greater than that of the hydrocarbon-containing first product stream that is also fed to the second reactor, hence hydrotreating conditions are typically maintained so as to prevent more hydrogen than necessary being utilised through processes such as hydrocracking of any of the feed components. Temperatures in the range of from 200 to 410°C are typically maintained, preferably in the range of from 320°C to 410°C. Typically, pressures in the range of from 20 to 200 bara (2 to 20 MPa) are used, preferably in the range of from 50 to 200 bara (5 to 20 MPa). Conditions are preferably maintained in the reactor such that almost complete conversion of the carboxylic acid and/or ester is achieved, for example greater than 90wt% conversion, preferably greater than 95% conversion.

The second hydrocarbon-containing product stream removed from the second reactor comprises one or more hydrocarbons derived from the carboxylic acid and/or ester fed to the second reactor. Optionally and preferably, the second hydrocarbon-containing product stream is treated to remove light end impurities, such as unreacted hydrogen or any hydrogen sulphide derived from further desulphurisation of the first hydrocarbon-containing product stream. This is suitably achieved by means of a flash separator for example.

As the second reactor is preferably operated under hydrotreating conditions, the catalyst in the second reactor is preferably a hydrotreating catalyst as hitherto described.

In embodiments of the invention having a sulphided catalyst in the second reactor, then hydrogen sulphide generated from desulphurisation reactions in the first reactor can advantageously assist in maintaining a sulphided active metal in the second reactor.

Either or both of the first and second hydrocarbon-containing product streams may comprise some hydrocarbons that are too heavy or light to be used as a single type of fuel. Thus, either or both of the product streams may optionally be fractionated or distilled such that, for example, one or more of a light hydrocarbon fraction, a gasoline fraction, a jet fuel fraction and a diesel fraction can be produced. This minimises waste from the process, and ensures that the final fuel blend maintains the quality and consistency of analogous fuels produced by means other than the present invention.

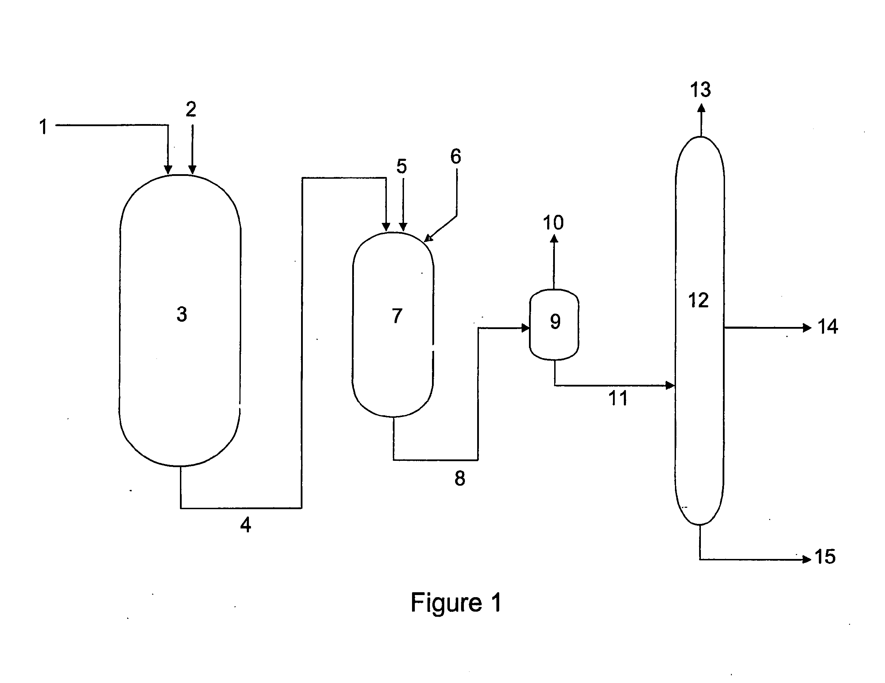

The process will now be illustrated by reference to Figure 1, which is a schematic overview of a process in accordance with the present invention.

A straight-run middle distillate stream 1 with sulphur content of 1 wt% is fed, together with hydrogen 2, to first reactor 3, which contains a sulphided Co-Mo/Alumina catalyst. Conditions in the first reactor are 370°C and 100 bara pressure. The Liquid Hourly Space Velocity (LHSV) of the middle distillate over the catalyst is 3 hr⁻¹. The first hydrocarbon-containing product stream 4 removed from the reactor, having a sulphur content of 75ppm is joined with a feed of tallow oil 5 and fed into a second reactor 7 together with hydrogen 6. The second reactor is maintained at 350°C and 99 bara pressure, with a total LHSV (i.e. the combined LHSV of the product from the first reactor and the biological oil) of 4hr⁻¹. The second hydrocarbon-containing product stream 8 removed from the second reactor is fed to a flash separator 9, wherein volatile components 10, including H₂S and unreacted hydrogen, are separated from a liquid phase 11 comprising fuel hydrocarbons. The liquid phase comprising fuel hydrocarbons is fed to a fractionation and stripping column 12 operating at 2 bara with a temperature at the base of the column of 380°C. A light phase 13 comprising light hydrocarbons and hydrogen sulphide is removed from the head of the column, a jet fuel stream 14 is removed from the middle portion of the column, above the point at which the fuel hydrocarbon stream 11 is fed, and a diesel fuel stream 15 is removed from the base of the column. The diesel fuel has a sulphur content of less than 50ppm.

## Claims

1. A process for the production of a fuel composition comprising hydrocarbons derived from carboxylic acids and/or carboxylic acid esters, which process comprises the steps of :
(a) feeding hydrogen and a first hydrocarbon-containing process stream to a first reactor;
(b) maintaining conditions within the first reactor sufficient to produce a first hydrocarbon-containing product stream with a reduced concentration of heteroatom-containing organic compounds and/or olefins compared to the first hydrocarbon-containing process stream , wherein said heteroatom-containing organic compounds are selected from compounds other than carboxylic acids and esters thereof;
(c) removing the first hydrocarbon-containing product stream from the first reactor; **characterised by** the process additionally comprising the steps of :
(d) feeding hydrogen, a carboxylic acid and/or carboxylic acid ester, and at least a portion of the first hydrocarbon-containing product stream to a second reactor;
(e) maintaining conditions within the second reactor sufficient to convert at least some of the carboxylic acid and/or carboxylic acid ester to one or more hydrocarbons;
(f) removing a second hydrocarbon-containing product stream from the second reactor, in which at least a portion of the hydrocarbons are derived from the carboxylic acid and/or carboxylic acid ester.

2. A process as claimed in claim 1, in which the fuel composition is a diesel fuel.

3. A process as claimed in claim 1 or claim 2, in which the carboxylic acid and/or carboxylic acid ester is a fatty acid and/or ester.

4. A process as claimed in any one of claims 1 to 3, in which the carboxylic acid and/or carboxylic acid ester is derived from plant or animal fat or oil.

5. A process as claimed in any one of claims 1 to 4, in which the first hydrocarbon-containing process stream comprises middle distillate hydrocarbons from a crude oil refinery.

6. A process as claimed in claim 5, in which the hydrocarbons comprise both straightrun middle distillate hydrocarbons, and hydrocarbons derived from another refinery process with a similar boiling range to that of the straight-run fraction.

7. A process as claimed in any one of claims 1 to 6, in which the first hydrocarbon-containing process stream has a sulphur concentration of 200ppm or more, expressed as elemental sulphur.

8. A process as claimed in any one of claims 1 to 7, in which the first hydrocarbon-containing product stream comprises less than 200ppm sulphur expressed as elemental sulphur.

9. A process as claimed in any one of claims 1 to 8, in which the first reactor is maintained at a temperature in the range of from 250 to 430°C and a pressure in the range of from 20 to 200 bara (2 to 20 MPa).

10. A process as claimed in any one of claims 1 to 9, in which the second reactor is maintained at a temperature in the range of from 200 to 410°C and a pressure in the range of from 20 to 200 bara (2 to 20 MPa).

11. A process as claimed in any one of claims 1 to 10, in which additional hydrocarbons are fed to the second reactor.

## Patentansprüche

1. Verfahren zur Herstellung einer Kraftstoffzusammensetzung umfassend Kohlenwasserstof fe, die von Carbonsäuren und/oder Carbonsäureestern abgeleitet sind, wobei das Verfahren die Schritte:
(a) Einspeisen von Wasserstoff und einem erstem Kohlenwasserstoff-enthaltenden Prozessstrom in einen ersten Reaktor;
(b) Aufrechthalten von Bedingungen in dem ersten Reaktor, die ausreichen, um einen ersten Kohlenwasserstoff-enthaltenden Produktstrom mit einer reduzierten Konzentration an Heteroatom-enthaltenden organischen Verbindungen und/oder Olefinen im Vergleich zu dem ersten Kohlenwasserstoff-enthaltenden Prozessstrom zu erzeugen, wobei die Heteroatom-enthaltenden organischen Verbindungen aus anderen Verbindungen als Carbonsäuren und Estern davon gewählt sind;
(c) Entfernen des ersten Kohlenwasserstoff-enthaltenden Produktstroms aus dem ersten Reaktor umfasst;
**dadurch gekennzeichnet, dass** das Verfahren zusätzlich die Schritte:
(d) Einspeisen von Wasserstoff, einer Carbonsäure und/oder eines Carbonsäureesters und zumindest eines Teils des ersten Kohlenwasserstoff-enthaltenden Produktstroms in einen zweiten Reaktor;
(e) Aufrechthalten von Bedingungen in dem zweiten Reaktor, die ausreichen, um zumindest etwas von der Carbonsäure und/oder dem Carbonsäureester in einen oder mehrere Kohlenwasserstoffe umzuwandeln;
(f) Entfernen eines zweiten Kohlenwasserstoff-enthaltenden Produktstroms aus dem zweiten Reaktor, worin zumindest ein Teil der Kohlenwasserstoffe von der Carbonsäure und/oder dem Carbonsäureester abgeleitet ist,
umfasst.

2. Verfahren nach Anspruch 1, wobei die Kraftstoffzusammensetzung ein Diesel-Kraftstoff ist.

3. Verfahren nach Anspruch 1 oder Anspruch 2, wobei die Carbonsäure und/oder der Carbonsäureester ein(e) Fettsäure und/oder -ester ist.

4. Verfahren nach einem der Ansprüche 1 bis 3, wobei die Carbonsäure und/oder der Carbonsäureester von Pflanzen- oder Tierfett oder -öl abgeleitet ist.

5. Verfahren nach einem der Ansprüche 1 bis 4, wobei der erste Kohlenwasserstoff-enthaltende Prozessstrom Mitteldestillat-Kohlenwasserstoffe aus einer Rohölraffinerie umfasst.

6. Verfahren nach Anspruch 5, wobei die Kohlenwasserstoffe sowohl Straightrun-Mitteldestillat-Kohlenwasserstoffe als auch Kohlenwasserstoffe, abgeleitet von einem anderen Raffinerieverfahren mit einem ähnlichen Siedebereich wie dem der Straightrun-Fraktion, umfassen.

7. Verfahren nach einem der Ansprüche 1 bis 6, wobei der erste Kohlenwasserstoff-enthaltende Prozessstrom eine Schwefelkonzentration von 200 ppm oder mehr, ausgedrückt als elementarer Schwefel, aufweist.

8. Verfahren nach einem der Ansprüche 1 bis 7, wobei der erste Wasserstoff-enthaltende Produktstrom weniger als 200 ppm Schwefel, ausgedrückt als elementarer Schwefel, umfasst.

9. Verfahren nach einem der Ansprüche 1 bis 8, wobei der erste Reaktor bei einer Temperatur im Bereich von 250 bis 430 °C und einem Druck im Bereich von 20 bis 200 bar (2 bis 20 MPa) gehalten wird.

10. Verfahren nach einem der Ansprüche 1 bis 9, wobei der zweite Reaktor bei einer Temperatur im Bereich von 200 bis 410 °C und einem Druck im Bereich von 20 bis 200 bar (2 bis 20 MPa) gehalten wird.

11. Verfahren nach einem der Ansprüche 1 bis 10, wobei zusätzliche Kohlenwasserstoffe in den zweiten Reaktor gespeist werden.

## Revendications

1. Procédé de production d'une composition de carburant comprenant des hydrocarbures dérivés d'acides carboxyliques et/ou d'esters d'acides carboxyliques, lequel procédé comprend les étapes consistant à :
(a) introduire de l'hydrogène et un premier fluide de procédé contenant des hydrocarbures dans un premier réacteur ;
(b) maintenir les conditions au sein du premier réacteur suffisantes pour produire un premier produit fluide contenant des hydrocarbures ayant une concentration réduite de composés organiques contenant des hétéroatomes et/ou d'oléfines par rapport au premier fluide de procédé contenant des hydrocarbures, où lesdits composés organiques contenant des hétéroatomes sont choisis parmi les composés autres que les acides carboxyliques et leurs esters ;
(c) éliminer le premier produit fluide contenant des hydrocarbures du premier réacteur ;
**caractérisé en ce que** le procédé comprend en outre les étapes consistant à :
(d) introduire de l'hydrogène, un acide carboxylique et/ou un ester d'acide carboxylique, et au moins une partie du premier produit fluide contenant des hydrocarbures dans un second réacteur ;
(e) maintenir les conditions au sein du second réacteur suffisantes pour convertir au moins une certaine quantité de l'acide carboxylique et/ou de l'ester d'acide carboxylique en un ou plusieurs hydrocarbures ;
(f) éliminer un second produit fluide contenant des hydrocarbures du second réacteur, dans lequel au moins une partie des hydrocarbures sont dérivés de l'acide carboxylique et/ou de l'ester d'acide carboxylique.

2. Procédé selon la revendication 1, dans lequel la composition de carburant est un carburant diesel.

3. Procédé selon la revendication 1 ou la revendication 2, dans lequel l'acide carboxylique et/ou l'ester d'acide carboxylique est un acide et/ou un ester gras.

4. Procédé selon l'une quelconque des revendications 1 à 3, dans lequel l'acide carboxylique et/ou l'ester d'acide carboxylique est dérivé d'une graisse ou d'une huile d'origine végétale ou animale.

5. Procédé selon l'une quelconque des revendications 1 à 4, dans lequel le premier fluide de procédé contenant des hydrocarbures comprend des hydrocarbures de type distillat moyen provenant d'une raffinerie de pétrole brut.

6. Procédé selon la revendication 5, dans lequel les hydrocarbures comprennent à la fois des hydrocarbures de type distillat moyen de première distillation et des hydrocarbures dérivés d'un autre procédé de raffinage présentant un intervalle d'ébullition similaire à celui de la fraction de première distillation.

7. Procédé selon l'une quelconque des revendications 1 à 6, dans lequel le premier fluide de procédé contenant des hydrocarbures a une concentration en soufre de 200 ppm ou plus, exprimée en soufre élémentaire.

8. Procédé selon l'une quelconque des revendications 1 à 7, dans lequel le premier produit fluide contenant des hydrocarbures comprend moins de 200 ppm de soufre exprimés en soufre élémentaire.

9. Procédé selon l'une quelconque des revendications 1 à 8, dans lequel le premier réacteur est maintenu à une température dans l'intervalle de 250 à 430 °C et à une pression dans l'intervalle de 20 à 200 bars (2 à 20 MPa).

10. Procédé selon l'une quelconque des revendications 1 à 9, dans lequel le second réacteur est maintenu à une température dans l'intervalle de 200 à 410 °C et à une pression dans l'intervalle de 20 à 200 bars (2 à 20 MPa).

11. Procédé selon l'une quelconque des revendications 1 à 10, dans lequel des hydrocarbures supplémentaires sont introduits dans le second réacteur.
